# EUROPEAN PATENT SPECIFICATION

(11) **EP 3 119 177 B1**
(45) Date of publication and mention of the grant of the patent: **30.10.2019**
(21) Application number: 15701462.2
(22) Date of filing: 20.01.2015
(51) Int. Cl.: A01B 3/42, A01B 3/46, A01B 15/00

(54) **AN ILLUMINATION SYSTEM FOR PLOUGHS**
BELEUCHTUNGSSYSTEM FÜR PFLÜGE
SYSTÈME D'ÉCLAIRAGE POUR CHARRUES

(30) Priority: 18.03.2014 DK 201470132
(43) Date of publication of application: 25.01.2017
(73) Proprietor: CNH Industrial Danmark A/S, 2620 Albertslund (DK)
(72) Inventor: GREEN, Ole, 6940 Lem St. (DK); JACOBSEN, Henrik Lynge, 4652 Hårlev (DK); JØRGENSEN, Erik Dalsro, 4070 Kirke Hyllinge (DK); SCHMIDT, Thomas, 8520 Lystrup (DK)
(74) Representative: Rasmussen, Martin Hoffgaard
(86) International application number: PCT/DK2015/000003
(87) International publication number: WO 2015/139703

(56) References cited:
- DE-A1-102009 044 004
- DE-A1-102012 108 327
- GB-A- 2 100 563
- GB-A- 2 468 123

## Description

### Field of the invention

The present invention relates in a first aspect to a plough system comprising a reversible plough combined with an illumination system. In a second aspect the present invention relates to the use of a plough system according to the first aspect.

### Background of the invention

Within the field of agriculture it has been known for thousands of years that it will be beneficial prior to sowing of crop seeds to plough the upper layer of the soil in order to turn that upper layer of the soil so as to nutrient and aerate that layer of soil, and at the same to bury remains of the previous crops into the soil.

I modern agriculture ploughing is performed by towing a mechanical device called a plough behind a tractor for accomplishing the ploughing. The mechanical device comprises a frame which is hooked on to the tractor and having at least some extension in a direction perpendicular to the direction of movement of the tractor. On the frame at number of specifically designed plough shears are arranged which are configured to be at least partly submerged in the soil upon being towed by the tractor. By moving the plough shears through the soil, the soil will by the action of the moving plough shears, be loosened and turned around.

For a number of years a specifically type of plough, called a reversible plough has been known. A reversible plough enables ploughing back and forth from one side of the field to the opposite side of the field, constantly ploughing recently un-ploughed soil and thereby ploughing in a repeated S-like pattern or serpentine-like pattern as it is well-known in the art.

A reversible plough comprises two sets of plough shears arranged on the same frame. In a configuration in which the first set is ready for ploughing, i.e. where the first set of plough shears are submerged or at least partly submerged into the soil, the other set of plough shears will be pointing upwards, compared to the first set of plough shears. A mechanical arrangement will enable shifting between the first set and the second set of plough shears, so that either of them may be the ones which are submerged into the soil.

Such an arrangement allows for providing evenly ploughed soil. When ploughing huge areas of farm land, the plough is moved through the soil in a serpentine pattern. Now, for example, in case the plough shears are designed in such a way that they will move the soil to the left as seen in the direction of movement, and in case the farmer ploughs the soil in an east-west direction, the soil will be moved in a southern direction. However, in case the farmer uses a non-reversible plough, when the farmer turns the tractor to plough in the opposite direction (i.e. in the west-east direction), the soil will still be moved to the left, as seen in the direction of movement, which will then be a northern direction. The result will accordingly be that the soil will be moved in different directions, compared to the direction of the already ploughed soil, which means that an uneven of inhomogeneous ploughing result is provided.

In the case of the prior art reversible plough, the two sets of ploughs shears are designed differently; one set is designed so as to move the soil to the left, as seen in the direction of movement, whereas the other set is designed so as to move the soil to the right, as seen in the direction of movement.

Accordingly, when ploughing the soil in a serpentine pattern, the reversible plough allows the soil to be moved in the direction of the already ploughed soil, irrespective of the direction of ploughing. One example of a reversible plough is disclosed in GB 2 100 563 A. This document discloses a reversible plough comprising a number of plough shears which are being arranged in two groups which are mounted on a frame. The plough comprises shifting means allowing shifting between a first configuration in which one group of plough shears is pointing downwards and in which the second group of plough shears is pointing upwards; and a second configuration in which the first group of plough shears is pointing upwards and in which the second group of plough shears is pointing downwards. In the plough disclosed in GB 2 100 563 A, the plough frame is being suspended via a swivel head with a rotary joint and hereby a minimum turning circle of the tractor and plough is assured. GB 2 100 563 A is not at all concerned with the problem of ploughing during poor lighting conditions.

Many regions and/or countries have provided legislation limiting the time of year where ploughing is permitted. As a result, a farmer having larger areas of agricultural land must utilize as best as possible the time available in respect of which ploughing is permitted. As a consequence, it will often be necessary to plough day and night during these periods of time where ploughing is allowed.

In order to be able provide a good ploughing quality when ploughing at night where there is no sunlight, the tractor towing the plough is provided with electric spotlight emitting light in the direction towards the ploughs in the soil and the soil surrounding these ploughs. Accordingly, when ploughing at night time the driver of the tractor will constantly be looking backwards in order to monitor the quality of the ploughing and in order to correct any deviation from an optimum ploughing quality.

When doing so, the driver of the tractor will be somewhat blinded by the light reflected by the set of plough shears which are not submerged into the soil.

The reflection of light from these plough shears and the resulting blinding the driver of the tractor, will lead to the result that the driver will not be able to monitor the quality of his ploughing in an optimum way.

Accordingly, there is a need for an improved reversible plough system which alleviate, or even eliminate the above mentioned disadvantages of the prior art reversible plough system.

It is an object of the present invention to provide an improved reversible plough system which will improve ploughing quality when ploughing at night time.

### Brief description of the invention

The object of the present invention is achieved by a plough system according to claim 1, and by the use according to claim 16. Preferred embodiments of the invention are defined in the dependent claims 2 - 15.

Accordingly in a first aspect, the present invention relates to a plough system, wherein said plough system in the configuration intended for use comprising:
i) a reversible plough;
   wherein said reversible plough comprises a number of plough shears {P₁, P₂, P₃,... P_{2N}} being arranged in two groups {P₁, P₃, ... P_{2N-1}} and {P₂, P₄, ... P_{2N}}, said two groups comprises an equal amount of plough shears, and N being an integer which is equal to the number of plough shears in each of said two groups;
   said plough shears being mounted on a frame of said reversible plough;
   wherein said reversible plough comprises shifting means for shifting between a first configuration in which said one group of plough shears {P₁, P₃, ... P_{2N-1}} is pointing downwards and said second group of plough shears {P₂, P₄, ... P_{2N}} is pointing upwards; and a second configuration in which said one group of plough shears {P₁, P₃, ... P_{2N-1}} is pointing upwards and said second groupof plough shears {P₂, P₄, ... P_{2N}} is pointing downwards;
   **characterized in** that said reversible plough is combined with
ii) an illumination system;
   said illumination system comprises:
   a number of lamp assemblies {L₁, L₂, L₃,... L_{2N}} being arranged in two groups {L₁, L₃, ... L_{2N-1}} and {L₂, L₄, ... L_{2N}}; said two groups comprises an equal amount of lamp assemblies, and N being an integer which is equal to the number of lamp assemblies in each of said two groups;
   a number of brackets {B₁, B₂, B₃,... B_{N}};
   wherein each bracket Bᵢ comprises the two lamp assemblies {L₂ᵢ₋₁, L₂ᵢ}, i being an integer in the range {1; N};
   wherein the group of lamp assemblies {L₁, L₃,... L_{2N-1}} are electrically coupled in a first circuit C₁ in such a way that they can be switched on/off via a first switch S₁;
   wherein the group of lamp assemblies {L₂, L₄, ... L_{2N}} are electrically coupled in a second circuit C₂ in such a way that they can be switched on/off via a via a second switch S₂;
   wherein in respect of each bracket, Bᵢ, the lamp assemblies L₂ᵢ₋₁ and L₂ᵢ are mounted on said bracket in such a way that light emitted from said lamp assemblies L₂ᵢ₋₁ and L₂ᵢ in use are having complementary paths of propagation;
   wherein said brackets {B₁, B₂, B₃,... B_{N}} are arranged on said reversible plough.

In a second aspect the present invention relates to the use of a plough system according to the first aspect for ploughing an agricultural area of soil.

The present invention alleviates or even eliminates the problem of blinding the driver when ploughing at nighttime using a reversible plough and illuminating the area surrounding the plough shears being submerged into the soil by using spotlights arranged on the rear of the tractor towing the plough.

### Brief description of the figures

Fig. 1 is a perspective view of a prior art reversible plough.
Fig. 2 is a perspective view of a reversible plough system according to the present invention.
Fig. 3 is a schematic illustration of the principle of the reversible plough system according to the present invention.
Fig. 4a and 4b illustrate the concept of complementary paths of light propagation and non-complementary paths of light propagation of two lamp assemblies as defined in the present application.

### Detailed description of the invention

### The first aspect of the present invention

The present invention relates to a plough system 100, wherein said plough system in the orientation intended for use comprising:
i) a reversible plough 200;
   wherein said reversible plough 200 comprises a number of plough shears {P₁, P₂, P₃,... P_{2N}} being arranged in two groups {P₁, P₃, ... P_{2N-1}} and {P₂, P₄, ... P_{2N}}, said two groups comprises an equal amount of plough shears, and N being an integer which is equal to the number of plough shears in each of said two groups;
   said plough shears being mounted on a frame 2 of said reversible plough;
   wherein said reversible plough comprises shifting means 4 for shifting between a first configuration in which said one group of plough shears {P₁, P₃, ... P_{2N-1}} is pointing downwards and said second group of plough shears {P₂, P₄, ... P_{2N}} is pointing upwards; and a second configuration in which said one group of plough shears {P₁, P₃, ... P_{2N-1}} is pointing upwards and said second group of plough shears {P₂, P₄, ... P_{2N}} is pointing downwards;
   **characterized in** that said reversible plough 200 is combined with:
ii) an illumination system 300;
   said illumination system 300 comprises:
   a number of lamp assemblies {L₁, L₂, L₃,... L_{2N}} being arranged in two groups {L₁, L₃, ... L_{2N-1}} and {L₂, L₄, ... L_{2N}}; said two groups comprises an equal amount of lamp assemblies, and N being an integer which is equal to the number of lamp assemblies in each of said two groups;
   a number of brackets {B₁, B₂, B₃,... B_{N}};
   wherein each bracket Bᵢ comprises the two lamp assemblies {L₂ᵢ₋₁, L₂ᵢ}, i being an integer in the range {1; N};
   wherein the group of lamp assemblies {L₁, L₃,... L_{2N-1}} are electrically coupled in a first circuit C₁ in such a way that they can be switched on/off via a first switch S₁;
   wherein the group of lamp assemblies {L₂, L₄, ... L_{2N}} are electrically coupled in a second circuit C₂ in such a way that they can be switched on/off via a via a second switch S₂;
   wherein in respect of each bracket, Bᵢ, the lamp assemblies L₂ᵢ₋₁ and L₂ᵢ are mounted on said bracket in such a way that light emitted from said lamp assemblies L₂ᵢ₋₁ and L₂ᵢ in use are having complementary paths of propagation;
   wherein said brackets {B₁, B₂, B₃,... B_{N}} are arranged on said reversible plough.

In the present description and in the appended claims, the term "in the orientation intended for use" shall be construed to mean an orientation of the plough 200 which is normal for the plough in a ploughing situation. This accordingly means that the plough is in an orientation which allows the plough to be towed behind a tractor and in which the one group of plough shears is orientated so as to be allows at least partly submerging into the soil and in which the other group of plough shears is orientated so as to point into the air.

Accordingly, the plough system 100 allows ploughing a reversible plough in the usual way and in addition to this the illumination system of the plough system allows ploughing at night time in an improved way, in that the illumination system of the plough system is configured so as the lamps {L₁, L₃, ... L_{2N-1}} are illuminating the corresponding plough shears {P₁, P₃, ... P_{2N-1}} together with the soil immediately surrounding these plough shears, when these plough shears are being submerged into the soil; and so that the lamps {L₂, L₄, ... L_{2N}} are illuminating the corresponding plough shears{P₂, P₄, ... P_{2N}} together with the soil immediately surrounding these plough shears, when these plough shears are being submerged into the soil. In this way, the driver of the tractor will avoid being blinded by reflected light from the non-submerged plough shears, and originating from light spots arranged on the rear side of the tractor.

The control unit ensures a somewhat automated operation of various parameters of the plough system and thus eases the work load of the operator or driver.

Furthermore, the plough system will ensure that whenever the operator or driver of the tractor makes a shift indirection exceeding a predetermined threshold limit, the sensing means will automatically sense that a shift in direction has taken place and subsequently, the control unit will automatically provide for actions to be taken in this regard. Such actions may be that the control unit provides for turning the plough shares such that those plough shares previously being submerged into the soil will now be pointing upwards, and such that those plough shares previously being pointing upwards will now be submerged into the soil. Further and/or alternatively, such actions may be that the control unit provides for switching off the power supply to the one group of lamps in the lamp assemblies now pointing upwards, and switch on the power supply to the other group of lamps in the lamp assemblies now pointing at a direction of the plough shares now being submerged into the soil.

In one embodiment of the first aspect of the present invention, the plough system is designed in such a way that in respect of one or more of said lamp assemblies, preferably all said lamp assemblies, said one or more lamp assemblies each comprises one or more lamps.

By providing the plough system in such a way that one or more lamp assemblies each comprises one or more lamps allows to design the light pattern of the illuminated plough shear which is submerged into the soil (and its surrounding soil). Further, this embodiment allows for adjusting, such as increasing the intensity of the light illuminating the submerged plough shear and its surrounding soil.

In one embodiment of the first aspect of the present invention, the plough system is designed in such a way that in respect of one or more of brackets Bᵢ ε {B₁, B₂, B₃,... B_{N}}, preferably all said brackets, said brackets comprises adjustment means for adjusting the direction of propagation of light emitted from said two lamp assemblies {L₂ᵢ₋₁, L₂ᵢ}.

In one embodiment of the first aspect of the present invention, the plough system is designed in such a way that in respect of one or more of said brackets Bᵢ ε {B₁, B₂, B₃,... B_{N}}, preferably in respect of all the brackets Bᵢ, the lamp assemblies L₂ᵢ₋₁ and L₂ᵢ are configured so as, in use, to direct their emitted light towards the soil surrounding the plough shears P₂ᵢ₋₁ and P₂ᵢ.

These two embodiments further ensure allowing varying the design of the light pattern illuminating the plough shear which is submerged into the soil.

In one embodiment of the first aspect of the present invention, the plough system is designed in such a way that one or more, preferable all of the lamps in respect of one or more of the lamp assemblies {L₁, L₂, L₃,... L_{2N}}, preferably in respect of all the lamp assemblies {L₁, L₂, L₃,... L_{2N}} are being selected from the group comprising LED, incandescent light source, such as halogen light sources or heated metal filament light sources.

Such types of lamps have proven to provide a fair balance between ability to provide a sufficient intensity of light one the one hand, and to be able to withstand the rather rough conditions encountered when the plough system is ploughing.

In one embodiment of the first aspect of the present invention, the plough system is designed in such a way that said plough system comprises means for adjusting the intensity of light emitted from said lamp assemblies.

In one embodiment of this embodiment, the plough system is designed in such a way that said plough system in respect of said two lamp assemblies {L₂ᵢ₋₁, L₂ᵢ} of one or more of said brackets Bᵢ ε {B₁, B₂, B₃,... B_{N}}, preferably all said brackets, comprises means for adjusting the intensity of light emitted from said lamp assemblies {L₂ᵢ₋₁, L₂ᵢ} independently of the intensity of lightemitted from the lamp assemblies of one or more of the remaining brackets.

This ensures that in respect of each bracket Bᵢ ε {B₁, B₂, B₃,... B_{N}}, the lamp assemblies {L₂ᵢ₋₁, L₂ᵢ} arranged on this bracket Bᵢ can be adjusted in respect of the intensity of the light emitted therefrom. Accordingly, the intensity pattern of illumination of the plough shears can be designed as desired.

In another embodiment, the plough system is designed in such a way that said plough system in respect of said two lamp assemblies {L₂ᵢ₋₁, L₂ᵢ} of one or more of said brackets Bᵢ ε {B₁, B₂, B₃,...B_{N}}, preferably all said brackets, comprises means for adjusting the intensity of light emitted from the lamp assembly L₂ᵢ₋₁ independently of the intensity of light emitted from the lamp assembly L₂ᵢ.

This ensures that in respect of each bracket Bᵢ ε {B₁, B₂, B₃,... B_{N}}, the lamp assembly L₂ᵢ₋₁ arranged on this bracket Bᵢ can be adjusted independently of the lamp assembly L₂ᵢ arranged on the same bracket Bᵢ, as to the intensity of the light emitted therefrom. Accordingly, the intensity pattern of illumination of the plough shears can be further optimized.

In one embodiment the plough system is designed in such a way that the intensity of the light emitted of any lamp of any lamp assembly may be adjusted independently of any other lamp of any other lamp assembly.

In one embodiment of this embodiment, said sensing means is being selected from the group comprising: orientation and angle measurement devices, such as a GPS receiver, a gyroscope, an accelerometer, an electrical motion unit (EMU), and a motion reference unit (MRU).

In one embodiment of the first aspect of the present invention one or more of said lamp assemblies {L₁, L₂, L₃,... L_{2N}} are being configured to be able to lit so as to enhance traffic safety in a transport situation in which the plough system is being towed on a public road or street.

In this way a more safe transportation on public roads and streets is provided.

In one embodiment of the first aspect of the present invention the number of plough shears, N within each of said two groups being 2 - 32, such as 4 - 30, for example 6 - 28, e.g. 8 - 26, such as 10 - 24, for example 12 - 22, e.g. 14 - 20, such as 16 - 18.

Such numbers of plough shares are common for the prior art types of reversible ploughs and will work well with the inventive reversible plough system as well.

In one embodiment of the first aspect of the present invention said brackets {B₁, B₂, B₃,... B_{N}} comprises mounting means for mounting said bracket onto the frame of said reversible plough.

In one embodiment of this embodiment said mounting means comprises glue, a detachable click-on means or one or more through-going holes in each bracket for bolting said bracket onto said frame of the reversible plough via correspondingly arranged holes, threaded or non- threaded in a part of said reversible plough.

These embodiments ensure an easy and fast detachable mounting of the illumination system onto the reversible plough which at the same time can withstand the rather rough conditions encountered during ploughing.

In one embodiment of the first aspect of the present invention, the plough system in respect of one or more brackets Bᵢ ε {B₁, B₂, B₃,... B_{N}}, preferably all said brackets, said two lamp assemblies {L₂ᵢ₋₁, L₂ᵢ} each comprise two lamps.

In one embodiment of this embodiment the lamp assembly L₂ᵢ₋₁ or L₂ᵢ comprises lamps pointing to a corresponding plough shear which is in a ploughing configuration, wherein said one lamp is having its maximum intensity of light propagation at an angle approximately 50 -75 ° in relation to vertically downward; whereas said other lamp is having its maximum intensity of light propagation at an angle approximately 0 - 10° in relation to vertically downward.

Such a configuration of one or more of the lamp assemblies have proven very beneficial in terms of providing sufficient illumination of soil surrounding the plough shears.

### The second aspect of the present invention

The second aspect of the present invention relates to the use of a plough system 100 according to any the first aspect for ploughing an area of agricultural soil.

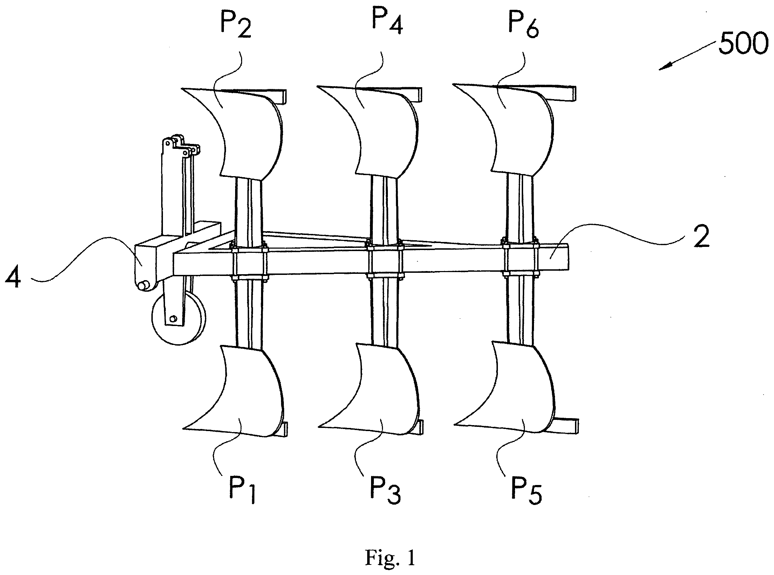

Referring now in details to the drawings for the purpose of illustrating preferred embodiments of the present invention, Fig. 1 shows a traditional and conventional reversible plough 500 according to the prior art. The plough comprises a frame 2 onto which is mounted two groups of ploughshares P₁, P₃, P₅, and P₂, P₄, P₆ respectively. The first group of plough shares is arranged in a configuration which allows for these plough shares to be submerged into the soil. The second group of plough shares is arranged in a configuration in which these plough shares point upward. The plough also comprises shifting means 4 for shifting the configuration of the two groups of plough shares between a configuration in which the first group of plough shears are configured for being submerged into the soil and in which the second group of plough shears are pointing upward; and a configuration, in which the second group of plough shears are configured for being submerged into the soil, and in which the first group of plough shears are pointing upward. The plough of fig. 1 is intended for being towed behind a tractor.

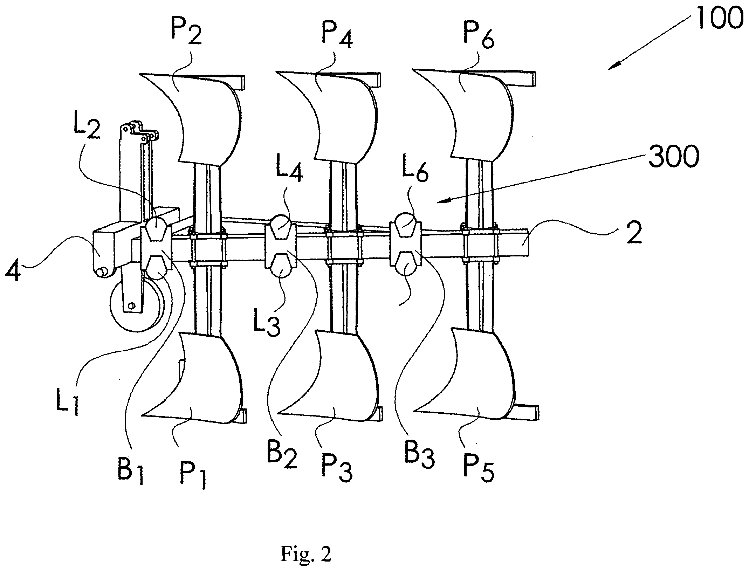

Fig. 2 shows one embodiment of the plough system 100 according to the first aspect of the present invention. The plough system comprises a reversible plough 200 and an illumination system 300.

The reversible plough comprises a frame 2 onto which is mounted two groups of plough shares P₁, P₃, P₅, and P₂, P₄, P₆ respectively. The first group of plough shares is arranged in a configuration which allows for these plough shares to be submerged into the soil. The second group of plough shares is arranged in a configuration in which these plough shares point upward. The plough also comprises shifting means 4 for shifting the configuration of the two groups of plough shares between a configuration in which the first group of plough shears are configured for being submerged into the soil and in which the second group of plough shears are pointing upward; and a configuration, in which the second group of plough shears are configured for being submerged into the soil, and in which the first group of plough shears are pointing upward. The plough of fig. 2 is intended for being towed behind a tractor.

Additionally, the plough system in fig. 2 comprises an illumination system 300. The illumination system comprises the brackets B₁, B₂, B₃. Each bracket is mounted onto the frame 2 of the reversible plough. Each bracket Bᵢ comprises two lamp assemblies L₂ᵢ₋₁, L₂ᵢ. That is, bracket B₁ comprises lamp assemblies L₁, L₂; bracket B₂ comprises lamp assemblies L₃, L₄; bracket B₃ comprises lamp assemblies L₅, L₆.

Each lamp assembly L₂ᵢ₋₁ and L₂ᵢ comprises one lamp.

The lamp assemblies of each bracket is arranged on the bracket in such a way that each lamp Lᵢ, upon being switched on, will illuminate a corresponding plough shear Pᵢ and the soil surrounding that plough shear in such a way that the light emitted from the two lamp assemblies of a specific bracket are having complementary paths of propagation.

In this way, the illumination system secures a proper and sufficient illumination of the plough shears being submerged into the soil, and more importantly, the surrounding soil, without causing any blinding of the operator or driver driving the tractor.

As an alternative to providing each lamp assembly L₂ᵢ₋₁ and L₂ᵢ with one lamp, each lamp assembly mounted on the bracket Bᵢ may comprise a number of lamps of two or more, such as 2, 4, 6, 8 or 10 lamps, and each being directed in a specific direction, wherein each group of lamp assembliesin use provide a propagation of light in such a way that in respect of any bracket, light emitted from the first group of lamp assembly propagate in a way that is complementary to the light emitted from the second group of lamp assembly.

The illumination system also comprises wires and switches for providing and controlling the power supply to the lamps (not shown in fig. 2).

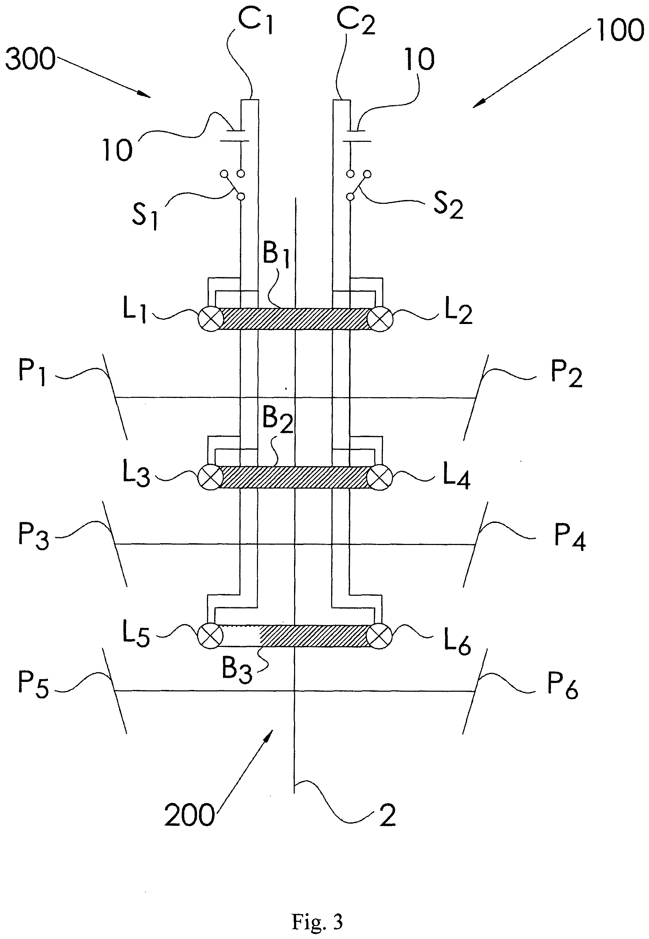

Fig 3 illustrates schematically the plough system 100 of the first aspect of the present invention. The plough system comprises a reversible plough 200 and an illumination system 300. The plough system comprises a frame 2 carrying the brackets B₁, B₂, B₃. The frame 2 is connected to plough shears P₁, P₃, P₅, and P₂, P₄, P₆ arranged in two groups P₁, P₃, P₅, and P₂, P₄, P₆, respectively.

The bracket B₁ comprises lamp assemblies L₁, L₂; the bracket B₂ comprises lamp assemblies L₃, L₄; and the bracket B₃ comprises lamp assemblies L₅, L₆. The lamps L₁, L₂, L₃, L₄, L₅, and L₆ are each arranged so as to be able to emit light in a direction towards its own individually assigned plough shear P₁, P₃, P₅, and P₂, P₄, P₆, respectively.

Additionally, the illumination system 300 of the plough system 100 comprises two electric circuits C₁ and C₂. The lamp assemblies L₁, L₂, L₃ are electrically connected to the circuit C₁ and supplied with electric power via power supply 10. All the lamp assemblies L₁, L₂, L₃ can be switched on/off via switch S₁.

The lamp assemblies L₄, L₅, L₆ are electrically connected to the circuit C₂ and supplied with electric power via power supply 10. All the lamp assemblies L₄, L₅, L₆ can be switched on/off via switch S₂.

Instead of simply providing the electrical circuit with a switch that is able to switch off the light emitted from the two groups of lamp assemblies L₁, L₂, L₃ and L₄, L₅, and L₆, respectively, said plough system may comprise means for adjusting the intensity of light emitted from said lamp assemblies.

In such an embodiment, said means for adjusting the intensity of light emitted from said lamp assemblies may adjust the intensity of light emitted from the lamp assemblies of one bracket independently to the intensity of light emitted from the lamp assemblies of one bracket the remaining brackets.

In such an embodiment, said means for adjusting the intensity of light emitted from said lamp assemblies may adjust the intensity of light emitted from one lamp assembly of one bracket independently of the intensity of light emitted from any other lamp.

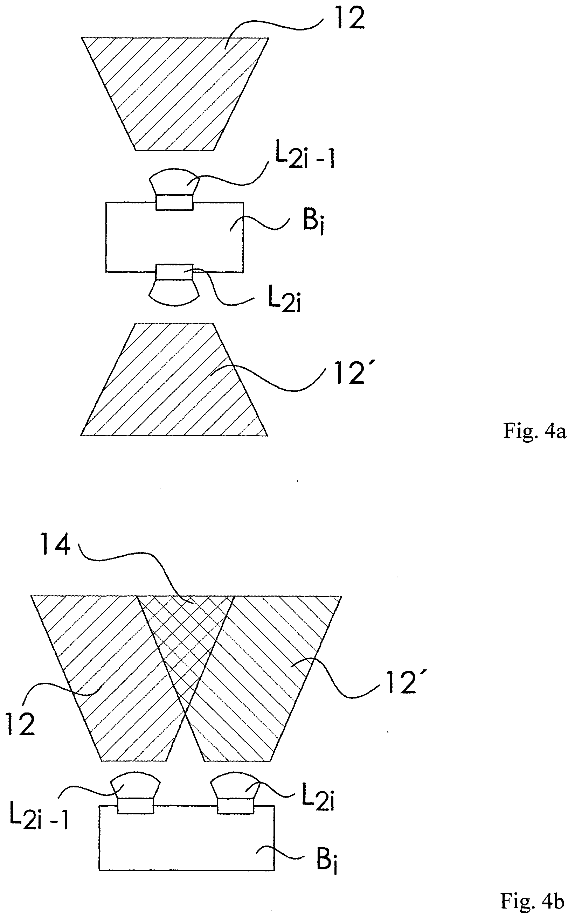

Fig. 4a and 4b illustrate the concept of complementary paths of light propagation of two lamp assemblies as used in the present application. Fig. 4a shows a bracket Bᵢ of a reversible plough system according to the first aspect of the present invention. The bracket Bᵢ comprises the lamp assemblies L₂ᵢ₋₁ and L₂ᵢ. The lamp assemblies L₂ᵢ₋₁ and L₂ᵢ are arranged on the bracket Bᵢ in such a way that their respective areas or paths of light 12, 12' emitted therefrom are complementary in the sense that no overlap of the respective areas or paths of light 12, 12' occurs.

This is in contrast to the situation illustrated in fig. 4b in which the bracket Bᵢ of a reversible plough system not according to the the present invention comprises the lamp assemblies L₂ᵢ₋₁ and L₂ᵢ.

The lamp assemblies L₂ᵢ₋₁ and L₂ᵢ in fig. 4b are arranged on the bracket Bᵢ in such a way that light emitted therefrom propagate in such a way that part of the area of propagation 12,12' of the light is complementary in the sense that no overlap of these respective areas or paths of light 12, 12' occurs. However, other part of the area of propagation 14 of the light is non-complementary in the sense that indeed an overlap of the respective areas or paths of light occurs. Accordingly, the system disclosed in fig. 4b does not fulfill the requirement according to the present invention.

Above only a few embodiments of the invention have been described, however, it can easily be envisaged that several other embodiments are possible within the scope of the invention as defined in the claims.

### List of reference numerals

- 2: Frame of reversible plough
- 4: Shifting means for shifting configuration of reversible plough
- 6: Control unit
- 8: Sensing means
- 10: Power supply
- 12,12': Complementary area of light propagation
- 14: Non- Complementary area of light propagation
- P₁,P₂,..P_{2N}: Plough shear
- L₁,L₂,..L_{2N}: Lamp assembly
- B₁,B₂,..B_{N} C₁: Bracket First circuit
- C₂ S₁: Second circuit First switch
- S₂: Second switch

- 100: Plough system
- 200: Reversible plough
- 300: Illumination system
- 500: Prior art reversible plough

## Claims

1. A plough system (100), wherein said plough system in the orientation intended for use comprising:
i) a reversible plough (200);
wherein said reversible plough (200) comprises a number of plough shears {P₁, P₂, P₃,... P_{2N}} being arranged in two groups {P₁, P₃, ... P_{2N-1}} and {P₂, P₄, ... P_{2N}}, said two groups comprises an equal amount of plough shears, and N being an integer which is equal to the number of plough shears in each of said two groups;
said plough shears being mounted on a frame (2) of said reversible plough;
wherein said reversible plough comprises shifting means (4) for shifting between a first configuration in which said one group of plough shears {P₁, P₃, ... P_{2N-1}} is pointing downwards and said second group of plough shears {P₂, P₄, ... P_{2N}} is pointing upwards; and a second configuration in which said one group of plough shears {P₁, P₃, ... P_{2N-1}} is pointing upwards and said second group of plough shears {P₂, P₄, ... P_{2N}} is pointing downwards;
**characterized in that** said reversible plough (200) is combined with:
ii) an illumination system (300);
said illumination system (300) comprises:
a number of lamp assemblies {L₁, L₂, L₃,... L_{2N}} being arranged in two groups {L₁, L₃, ... L_{2N-1}} and {L₂, L₄, ... L_{2N}}; said two groups comprises an equal amount of lamp assemblies, and N being an integer which is equal to the number of lamp assemblies in each of said two groups;
a number of brackets {B₁, B₂, B₃,... B_{N}};
wherein each bracket Bi comprises the two lamp assemblies {L₂ᵢ₋₁, L₂ᵢ}, i being an integer in the range {1; N};
wherein the group of lamp assemblies {L₁, L₃,... L_{2N-1}} are electrically coupled in a first circuit C₁ in such a way that they can be switched on/off via a first switch S₁;
wherein the group of lamp assemblies {L₂, L₄, ... L_{2N}} are electrically coupled in a second circuit C₂ in such a way that they can be switched on/off via a second switch S₂;
wherein in respect of each bracket, Bᵢ, the lamp assemblies L₂ᵢ₋₁ and L₂ᵢ are mounted on said bracket in such a way that light emitted from said lamp assemblies L₂ᵢ₋₁ and L₂ᵢ in use are having complementary paths of propagation;
wherein said brackets {B₁, B₂, B₃,... B_{N}} are arranged on said reversible plough
wherein said plough system further comprising a control unit (6) for controlling said reversible plough; and/or said illumination system;
wherein said control system comprises sensing means (8) for sensing a shift in the direction of movement over the ground;
wherein said control system is being configured to automatically activate the switch S₁ and the switch S₂ concurrently with shifting the configuration of the reversible plough from a configuration in which the group of plough shears {P₁, P₃, ... P_{2N-1}} are submerged into the soil to a configuration in which the group of plough shears {P₂, P₄, ... P_{2N}} are submerged into the soil, and vice versa.

2. A plough system according to claim 1, wherein in respect of one or more of said lamp assemblies, preferably all said lamp assemblies, said one or more lamp assemblies each comprises one or more light lamps.

3. A plough system according to claim 1 or 2, wherein in respect of one or more of brackets Bᵢ ε {B₁, B₂, B₃,... B_{N}}, preferably all said brackets, said brackets comprises adjustment means for adjusting the direction of propagation of light emitted from said two lamp assemblies {L₂ᵢ₋₁, L₂ᵢ}.

4. A plough system according to any of the claims 1 - 3, wherein in respect of one or more of said brackets Bᵢ ε {B₁, B₂, B₃,... B_{N}}, preferably in respect of all the brackets Bᵢ, the lamp assemblies L₂ᵢ₋₁ and L₂ᵢ are configured so as, in use, to direct their emitted light towards the soil surrounding plough shears P₂ᵢ₋₁ and P₂ᵢ.

5. A plough system according to any of the claims 1 - 4, wherein one or more, preferable all of the lamps in respect of one or more of the lamp assemblies {L₁, L₂, L₃,... L_{2N}}, preferably in respect of all the lamp assemblies {L₁, L₂, L₃,... L_{2N}} are being selected from the group comprising LED, incandescent light source, such as halogen light sources or heated metal filament light sources.

6. A plough system according to any of the claims 1 - 5, wherein said plough system comprises means for adjusting the intensity of light emitted from said lamp assemblies and/or said lamps.

7. A plough system according to claim 6, wherein said plough system in respect of said two lamp assemblies {L₂ᵢ₋₁, L₂ᵢ} of one or more of said brackets Bᵢ ε {B₁, B₂, B₃,... B_{N}}, preferably all said brackets, comprises means for adjusting the intensity of light emitted from said lamp assemblies {L₂ᵢ₋₁, L₂ᵢ} independently of the intensity of light emitted from the lamp assemblies of one or more of the remaining brackets.

8. A plough system according to claim 7, wherein said plough system in respect of said two lamp assemblies {L₂ᵢ₋₁, L₂ᵢ} of one or more of said brackets Bᵢ ε {B₁, B₂, B₃,... B_{N}}, preferably all said brackets, comprises means for adjusting the intensity of light emitted from the lamp assembly L₂ᵢ₋₁ independently of the intensity of light emitted from the lamp assembly L₂ᵢ.

9. A plough system according to claim 1, wherein said sensing means is being selected from the group comprising: orientation and angle measurement devices, such as a GPS receiver, a gyroscope, an accelerometer, an electrical motion unit (EMU), and a motion reference unit (MRU).

10. A plough system according to any of the preceding claims, wherein one or more of said lamp assemblies {L₁, L₂, L₃,... L_{2N}} are being configured to be able to lit so as to enhance traffic safety in a transport situation in which the plough system is being towed on a public road or street.

11. A plough system according to any of the preceding claims, wherein the number of plough shears, N within each of said two groups being 2 - 32, such as 4 - 30, for example 6 - 28, e.g. 8 - 26, such as 10 - 24, for example 12 - 22, e.g. 14 - 20, such as 16 - 18.

12. A plough system according to any of the preceding claims, wherein said brackets {B₁, B₂, B₃,... B_{N}} comprises mounting means for mounting said bracket onto the frame of said reversible plough.

13. A plough system according to claim 12, wherein said mounting means comprises glue, a detachable click-on locking means or one or more through-going holes in each bracket for bolting said bracket onto said frame via correspondingly arranged holes, threaded or non- threaded in a part of said reversible plough.

14. A plough system according to any of the preceding claims, wherein in respect of one or more brackets Bᵢ ε {B₁, B₂, B₃,... B_{N}}, preferably all said brackets, said two lamp assemblies {L₂ᵢ₋₁, L₂ᵢ} each comprise two lamps.

15. A plough system according to claim 14, wherein in respect of the lamp assembly {L₂ᵢ₋₁, L₂ᵢ} comprising lamps pointing to a corresponding plough shear which is in a ploughing configuration said one lamp is having its maximum intensity of light propagation at an angle approximately 50 - 75 ° in relation to vertically downward; whereas said other lamp is having its maximum intensity of light propagation at an angle approximately 0 - 10° in relation to vertically downward.

16. Use of a plough system (100) according to any of the claims 1 - 15 for ploughing an area of agricultural soil.

## Patentansprüche

1. Pflugsystem (100), wobei das Pflugsystem in der für den Gebrauch beabsichtigten Ausrichtung umfassend:
i) einen Drehpflug (200);
wobei der Drehpflug (200) eine Anzahl an Pflugscheren {P₁, P₂, P₃, ... P_{2N}} umfasst, die in zwei Gruppen {P₁, P₃, ... P_{2N-1}} und {P₂, P₄, ... P_{2N}} angeordnet sind, wobei die zwei Gruppen eine gleiche Anzahl an Pflugscheren umfassen und N eine ganze Zahl ist, die gleich der Anzahl an Pflugscheren in jeder der zwei Gruppen ist;
wobei die Pflugscheren an einem Rahmen (2) des Drehpflugs montiert sind; wobei der Drehpflug Umschaltmittel (4) umfasst, um zwischen einer ersten Konfiguration, bei der die eine Gruppe von Pflugscheren {P₁, P₃, ... P_{2N-1}} nach unten weist und die zweite Gruppe von Pflugscheren {P₂, P₄, ... P_{2N}} nach oben weist; und einer zweiten Konfiguration, bei der die eine Gruppe von Pflugscheren {P₁, P₃, ... P_{2N-1}} nach oben weist und die zweite Gruppe von Pflugscheren {P₂, P₄, ... P_{2N}} nach unten weist, umzuschalten;
**dadurch gekennzeichnet, dass** der Drehpflug (200) kombiniert wird mit:
ii) einem Beleuchtungssystem (300);
wobei das Beleuchtungssystem (300) umfasst:
eine Anzahl an Leuchtmittelananordnungen {L₁, L₂, L₃, ... L_{2N}}, die in zwei Gruppen {L₁, L₃, ... L_{2N-1}} und {L₂, L₄, ... L_{2N}} angeordnet sind; wobei die zwei Gruppen eine gleiche Anzahl an Leuchtmittelanordnungen umfassen und N eine ganze Zahl ist, die gleich der Anzahl an Leuchtmittelanordnungen in jeder der zwei Gruppen ist;
eine Anzahl an Klammern {B₁, B₂, B₃, ... B_{N}};
wobei jede Klammer Bi die zwei Leuchtmittelanordnungen {L₂ᵢ₋₁, L₂ᵢ} umfasst, wobei i eine ganze Zahl im Bereich von {1; N} ist;
wobei die Gruppe von Leuchtmittelanordnungen {L₁, L₃, ... L_{2N-1}} in einer ersten Schaltung C₁ derart elektrisch gekoppelt sind, dass sie über einen ersten Schalter S₁ an-/ausgeschaltet werden können;
wobei die Gruppe von Leuchtmittelanordnungen {L₂, L₄, ... L_{2N}} in einer zweiten Schaltung C₂ derart elektrisch gekoppelt sind, dass sie über einen zweiten Schalter S₂ an-/ausgeschaltet werden können;
wobei bezüglich jeder Klammer Bᵢ die Leuchtmittelanordnungen L₂ᵢ₋₁ und L₂ᵢ an der Klammer Bᵢ derart montiert sind, dass von den Leuchtmittelanordnungen L₂ᵢ₋₁ und L₂ᵢ im Gebrauch abgegebenes Licht komplementäre Ausbreitungspfade aufweist;
wobei die Klammern {B₁, B₂, B₃, ... B_{N}} an dem Drehpflug angeordnet sind,
wobei das Pflugsystem weiter eine Steuereinheit (6) zum Steuern des Drehpflugs; und/oder des Beleuchtungssystems umfasst;
wobei das Steuersystem Erfassungsmittel (8) zum Erfassen eines Umschaltens in der Bewegungsrichtung oberhalb des Bodens umfasst;
wobei das Steuersystem dazu konfiguriert ist, den Schalter S₁ und den Schalter S₂ automatisch zu aktivieren bei gleichzeitigem Umschalten der Konfiguration des Drehpflugs von einer Konfiguration, bei der die erste Gruppe von Pflugscheren {P₁, P₃, ... P_{2N-1}} im Boden versenkt ist, zu einer Konfiguration, bei der die zweite Gruppe von Pflugscheren {P₂, P₄, ... P_{2N}} im Boden versenkt ist, und umgekehrt.

2. Pflugsystem nach Anspruch 1, wobei bezüglich einer oder mehrerer der Leuchtmittelanordnungen, bevorzugt aller Leuchtmittelanordnungen, die eine oder die mehreren Leuchtmittelanordnungen jeweils ein oder mehrere Lichtleuchtmittel umfassen.

3. Pflugsystem nach Anspruch 1 oder 2, wobei bezüglich einer oder mehrerer Klammern Bᵢ ε {B₁, B₂, B₃, ... B_{N}}, bevorzugt aller Klammern, die Klammern Einstellmittel zum Einstellen der Ausbreitungsrichtung von Licht, das von den zwei Leuchtmittelanordnungen {L₂ᵢ₋₁, L₂ᵢ} abgegeben wird, umfassen.

4. Pflugsystem nach einem der Ansprüche 1-3, wobei bezüglich einer oder mehrerer der Klammern Bᵢ ε {B₁, B₂, B₃, ... B_{N}}, bevorzugt bezüglich aller Klammern Bᵢ, die Leuchtmittelanordnungen L₂ᵢ₋₁ und L₂ᵢ so konfiguriert sind, dass sie im Gebrauch das von ihnen abgegebene Licht in Richtung des die Pflugscheren P₂ᵢ₋₁ und P₂ᵢ umgebenden Bodens lenken.

5. Pflugsystem nach einem der Ansprüche 1-4, wobei ein oder mehrere, bevorzugt alle Leuchtmittel bezüglich einer oder mehrerer der Leuchtmittelanordnungen {L₁, L₂, L₃, ... L_{2N}}, vorzugsweise bezüglich aller Leuchtmittelanordnungen {L₁, L₂, L₃, ... L_{2N}}, ausgewählt sind aus der Gruppe umfassend LED, Glühlichtquelle, wie Halogenlichtquellen oder Lichtquellen mit erhitzten Metalldrähten.

6. Pflugsystem nach einem der Ansprüche 1-5, wobei das Pflugsystem Mittel zum Einstellen der Intensität des von den Leuchtmittelanordnungen und/oder den Leuchten abgegebenen Lichts umfasst.

7. Pflugsystem nach Anspruch 6, wobei das Pflugsystem bezüglich der zwei Leuchtmittelanordnungen {L₂ᵢ₋₁, L₂ᵢ} von einer oder mehreren der Klammern Bᵢ ε {B₁, B₂, B₃, ... B_{N}}, bevorzugt aller Klammern, Mittel zum Einstellen der Intensität des Lichts, das von den Leuchtmittelanordnungen {L₂ᵢ₋₁, L₂ᵢ} abgegeben wird, unabhängig von der Intensität des Lichts, das von den Leuchtmittelanordnungen von einer oder mehreren der übrigen Klammern abgegeben wird, umfasst.

8. Pflugsystem nach Anspruch 7, wobei das Pflugsystem bezüglich der zwei Leuchtmittelanordnungen {L₂ᵢ₋₁, L₂ᵢ} von einer oder mehreren der Klammern Bᵢ ε {B₁, B₂, B₃, ... B_{N}}, bevorzugt aller Klammern, Mittel zum Einstellen der Intensität des Lichts, das von der Leuchtmittelanordnung L₂ᵢ₋₁ abgegeben wird, unabhängig von der Intensität des Lichts, das von der Leuchtmittelanordnung L₂ᵢ abgegeben wird, umfasst.

9. Pflugsystem nach Anspruch 1, wobei das Erfassungsmittel ausgewählt ist aus der Gruppe umfassend: Ausrichtungs- und Winkelmessvorrichtungen, wie beispielsweise ein GPS-Empfänger, ein Gyroskop, ein Beschleunigungsmesser, eine elektrische Bewegungseinheit (EMU) und eine Bewegungsreferenzeinheit (MRU).

10. Pflugsystem nach einem der vorstehenden Ansprüche, wobei eine oder mehrere der Leuchtmittelanordnungen {L₁, L₂, L₃, ... L_{2N}} dazu konfiguriert sind, dass sie zum Leuchten gebracht werden können, um die Verkehrssicherheit bei einer Transportsituation, bei der das Pflugsystem auf einer öffentlichen Landstraße oder Straße abgeschleppt wird, zu verbessern.

11. Pflugsystem nach einem der vorstehenden Ansprüche, wobei die Anzahl an Pflugscheren N in jeder der zwei Gruppen 2-32, wie etwa 4-30, beispielsweise 6-28, z. B. 8-26, wie etwa 10-24, beispielsweise 12-22, z. B. 14-20, wie 16-18, beträgt.

12. Pflugsystem nach einem der vorstehenden Ansprüche, wobei die Klammern {B₁, B₂, B₃, ... B_{N}} ein Montagemittel zum Montieren der Klammer an dem Rahmen des Drehpflugs umfasst.

13. Pflugsystem nach Anspruch 12, wobei das Montagemittel Klebstoff, ein lösbares Einschnappverriegelungsmittel oder ein oder mehrere Durchgangslöcher in jeder Klammer umfasst, um die Klammer anhand der entsprechend angeordneten Löcher, die mit einem Gewinde versehen sein können oder nicht, in einem Teil des Drehpflugs mit Bolzen an dem Rahmen zu verschrauben.

14. Pflugsystem nach einem der vorstehenden Ansprüche, wobei bezüglich einer oder mehrerer Klammern Bᵢ ε {B₁, B₂, B₃, ... B_{N}}, bevorzugt aller Klammern, die zwei Leuchtmittelanordnungen {L₂ᵢ₋₁, L₂ᵢ} jeweils zwei Leuchtmittel umfassen.

15. Pflugsystem nach Anspruch 14, wobei bezüglich der Leuchtmittelanordnung {L₂ᵢ₋₁, L₂ᵢ}, die Leuchtmittel umfassen, die zu einer entsprechenden Pflugschere, die sich in der Pflugkonfiguration befindet, zeigen, das eine Leuchtmittel seine maximale Intensität der Lichtausbreitung bei einem Winkel von etwa 50-75° in Bezug auf senkrecht nach unten aufweist; wobei das andere Leuchtmittel seine maximale Intensität der Lichtausbreitung bei einem Winkel von etwa 0-10° in Bezug auf senkrecht nach unten aufweist.

16. Verwendung eines Pflugsystems (100) nach einem der Ansprüche 1-15 zum Pflügen eines Bereichs mit Kulturboden.

## Revendications

1. Système de charrue (100), dans lequel ledit système de charrue dans l'orientation destinée à être utilisée comprend :
i) une charrue réversible (200) ;
dans lequel ladite charrue réversible (200) comprend un certain nombre de lames de charrue {P₁, P₂, P₃,...P_{2N}} agencées en deux groupes {P₁, P₃,...P_{2N-1}} et {P₂, P₄,...P_{2N}}, lesdits deux groupes comprenant une quantité égale de lames de charrue, et N étant un nombre entier qui est égal au nombre de lames de charrue dans chacun desdits deux groupes ;
lesdites lames de charrue étant montées sur un cadre (2) de ladite charrue réversible ;
dans lequel ladite charrue réversible comprend des moyens de bascule (4) pour un basculement entre une première configuration dans laquelle ledit un groupe de lames de charrues {P₁, P₃,...P_{2N-1}} pointe vers le bas et ledit second groupe de lames de charrue {P₂, P₄,...P_{2N}} pointe vers le haut ; et une seconde configuration dans laquelle ledit un groupe de lames de charrue {P₁, P₃,...P_{2N-1}} pointe vers le haut et ledit second groupe de lames de charrue {P₂, P₄,...P_{2N}} pointe vers le bas ;
**caractérisé en ce que** ladite charrue réversible (200) est combinée à :
ii) un système d'éclairage (300) ;
ledit système d'éclairage (300) comprenant :
un certain nombre d'ensemble de lampes {L₁, L₂, L₃,...L_{2N}} agencées en deux groupes {L₁, L₃,...L_{2N-1}} et {L₂, L₄, ...L_{2N}}; lesdits deux groupes comprenant une quantité égale d'ensemble de lampes, et N étant un nombre entier qui est égal au nombre d'ensembles de lampes dans chacun desdits deux groupes ;
un certain nombre de supports {B₁, B₂, B₃,...B_{N}} ;
dans lequel chaque support Bi comprend les deux ensembles de lampes {L₂ᵢ₋₁, L₂ᵢ}, i étant un nombre entier dans la plage de {1 ; N} ;
dans lequel le groupe d'ensembles de lampes {L₁, L₃,...L_{2N-1}} est couplé électriquement dans un premier circuit C₁ de sorte qu'elles puissent être mises sous tension/hors tension par le biais d'un premier commutateur S₁ ;
dans lequel le groupe d'ensembles de lampes {L₂, L₄, ...L_{2N}} est couplé électriquement dans un second circuit C₂ de telle sorte qu'elles puissent être mises sous tension/hors tension par le biais d'un second commutateur S₂ ;
dans lequel concernant chaque support, Bᵢ, les ensembles de lampes L₂ᵢ₋₁ et L₂ᵢ sont montés sur ledit support de telle sorte que la lumière émise desdits ensembles de lampes L₂ᵢ₋₁ et L₂ᵢ lors de l'utilisation ait des chemins complémentaires de propagation ;
dans lequel lesdits supports {B₁, B₂, B₃,...B_{N}} sont agencés sur ladite charrue réversible
dans lequel ledit système de charrue comprend en outre une unité de commande (6) pour commander ladite charrue réversible ; et/ou ledit système d'éclairage ;
dans lequel ledit système de commande comprend des moyens de détection (8) pour détecter un basculement dans la direction du mouvement sur le sol ;
dans lequel ledit système de commande est configuré pour activer automatiquement le commutateur S₁ et le commutateur S₂ de façon concomitante avec un basculement de la configuration de la charrue réversible d'une configuration dans laquelle le groupe de lames de charrues {P₁, P₃,...P_{2N-1}} est plongé dans la terre à une configuration dans laquelle le groupe de lames de charrue {P₂, P₄,...P_{2N}} est plongé dans la terre et inversement.

2. Système de charrue selon la revendication 1, dans lequel concernant un ou plusieurs desdits ensembles de lampes, de préférence tous lesdits ensembles de lampes, lesdits un ou plusieurs ensembles de lampes comprennent respectivement une ou plusieurs lampes d'éclairage.

3. Système de charrue selon la revendication 1 ou 2, dans lequel concernant un ou plusieurs des supports Bᵢ ε {B₁, B₂, B₃,...B_{N}}, de préférence tous lesdits supports, lesdits supports comprennent des moyens d'ajustement pour ajuster la direction de la propagation de la lumière émise à partir desdits deux ensembles de lampes {L₂ᵢ₋₁, L₂ᵢ}.

4. Système de charrue selon l'une quelconque des revendications 1 à 3, dans lequel concernant un ou plusieurs desdits supports Bᵢ ε {B₁, B₂, B₃,...B_{N}}, de préférence concernant tous lesdits supports Bᵢ, les ensembles de lampes L₂ᵢ₋₁ et L₂ᵢ sont configurés de façon à diriger, lors de l'utilisation, leur lumière émise vers la terre entourant les lames de charrue P₂ᵢ₋₁ et P₂ᵢ.

5. Système de charrue selon l'une quelconque des revendications 1 à 4, dans lequel une ou plusieurs, de préférence toutes les lampes concernant un ou plusieurs des ensembles de lampes {L₁, L₂, L₃,...L_{2N}}, de préférence concernant tous les ensembles de lampe {L₁, L₂, L₃,...L_{2N}} sont choisies dans le groupe comprenant une LED, une source de lumière incandescente, telles que des sources de lumière halogènes ou des sources de lumière à filament métallique chauffé.

6. Système de charrue selon l'une quelconque des revendications 1 à 5, dans lequel ledit système de charrue comprend des moyens d'ajustement de l'intensité de la lumière émise à partir desdits ensembles de lampes et/ou desdites lampes.

7. Système de charrue selon la revendication 6, dans lequel ledit système de charrue concernant lesdits deux ensembles de lampes {L₂ᵢ₋₁, L₂ᵢ} d'un ou plusieurs desdits supports Bᵢ ε {B₁, B₂, B₃,...B_{N}}, de préférence tous lesdits supports, comprend des moyens d'ajustement de l'intensité de la lumière émise à partir desdits ensembles de lampe {L₂ᵢ₋₁, L₂ᵢ} indépendamment de l'intensité de la lumière émise à partir des ensembles de lampes d'un ou plusieurs des supports restants.

8. Système de charrue selon la revendication 7, dans lequel ledit système de charrue concernant lesdits deux ensembles de lampes {L₂ᵢ₋₁, L₂ᵢ} d'un ou plusieurs desdits supports Bᵢ ε {B₁, B₂, B₃,...B_{N}}, de préférence tous lesdits supports, comprend des moyens d'ajustement de l'intensité de la lumière émise à partir dudit ensemble de lampes L₂ᵢ₋₁ indépendamment de l'intensité de la lumière émise à partir de l'ensemble de lampes L₂ᵢ.

9. Système de charrue selon la revendication 1, dans lequel lesdits moyens de détection sont choisis dans le groupe comprenant : des dispositifs d'orientation et de mesure d'angle, tels qu'un récepteur GPS, un gyroscope, un accéléromètre, une unité de mouvement électrique (EMU), et une unité de mouvement de référence (MRU).

10. Système de charrue selon l'une quelconque des revendications précédentes, dans lequel un ou plusieurs desdits ensembles de lampes {L₁, L₂, L₃,...L_{2N}} sont configurés de façon à pouvoir être allumés pour améliorer la sécurité du trafic dans une situation de transport dans lequel le système de charrue est tracté sur une voie publique ou une rue.

11. Système de charrue selon l'une quelconque des revendications précédentes, dans lequel le nombre de lames de charrues, N dans chacun desdits deux groupes est de 2 à 32, tel que de 4 à 30, par exemple de 6 à 28, par exemple de 8 à 26, tel que de 10 à 24, par exemple de 12 à 22, par exemple de 14 à 20, tel que de 16 à 18.

12. Système de charrue selon l'une quelconque des revendications précédentes, dans lequel lesdits supports {B₁, B₂, B₃,...B_{N}} comprennent des moyens de montage pour monter ledit support sur le cadre de ladite charrue réversible.

13. Système de charrue selon la revendication 12, dans lequel lesdits moyens de montage comprennent de la colle, un moyen de verrouillage par encliquetage détachable ou un ou plusieurs trous débouchants dans chaque support pour visser ledit support sur ledit cadre par le biais de trous agencés de façon correspondante, filetés ou non filetés dans une partie de ladite charrue réversible.

14. Système de charrue selon l'une quelconque des revendications précédentes, dans lequel concernant un ou plusieurs supports Bᵢ ε {B₁, B₂, B₃,...B_{N}}, de préférence tous lesdits supports, lesdits deux ensembles de lampes {L₂ᵢ₋₁, L₂ᵢ} comprennent chacun deux lampes.

15. Système de charrue selon la revendication 14, dans lequel concernant l'ensemble de lampes {L₂ᵢ₋₁, L₂ᵢ} comprenant des lampes pointant vers une lame de charrue correspondante qui est dans une configuration de labour, ladite une lampe a son intensité maximale de propagation de lumière à un angle d'environ 50 à 75° en relation avec un mouvement verticalement vers le bas ; alors que ladite autre lampe a son intensité maximale de propagation de lumière à un angle d'environ 0 à 10° en relation à un mouvement verticalement vers le bas.

16. Utilisation d'un système de charrue (100) selon l'une quelconque des revendications 1 à 15 pour labourer une zone d'une terre agricole.
